# EUROPEAN PATENT APPLICATION

(11) **EP 2 264 467 A1**
(43) Date of publication of application: **22.12.2010**
(21) Application number: 10165729.4
(22) Date of filing: 11.06.2010
(51) Int. Cl.: G01P 3/487, H02K 11/00

(54) **Rotational velocity measurement of a rotor**

(30) Priority: 19.06.2009 GB 0910558
(71) Applicant: Rolls-Royce plc, London SW1E 6AT (GB)
(72) Inventor: Lowe, Vincent, Portishead, Somerset BS20 7AR (GB); Daffey, Kevin, Chepstow, NP16 5TZ (GB)
(74) Representative: White, Kevin Andrew

(57) **Abstract**

A system is provided for measuring the rotational velocity of the rotor of an electric motor or generator having (i) a stator with a plurality of circumferentially spaced pole pieces, each pole piece having a corresponding armature winding, and (ii) a rotor with a plurality of circumferentially spaced magnet portions, the armature windings interacting with the magnetic field produced by the magnet portions. The system includes one or more voltage sensing coils. The or each voltage sensing coil is adapted to encircle a respective pole piece of the stator such that a time-varying electromotive force is induced in the voltage sensing coil as the magnet portions of the rotor pass by the pole piece. The system further includes a detector for detecting the time-varying electromotive force induced in the or each voltage sensing coil, and determining the rotational velocity of the rotor from the time between peaks in the induced electromotive force.

## Description

The present invention relates to the rotational velocity measurement of a rotor, and particularly the rotational velocity of a rotor of an electric motor or generator.

Gas turbine speed and thrust are generally controlled using speed sensors which monitor the rotational velocity of each shaft of the turbine.

These speed sensors are dedicated components that take up space within the gas turbine on the shaft.

A conventional shaft speed sensor comprises a combination of a phonic (toothed) wheel mounted on the shaft and two or three proximity probes (pulse probes) per phonic wheel that detect the teeth on the phonic wheel by sensing the change in reluctance as the wheel rotates. Each pulse probe produces an output voltage waveform (similar to a sinusoid) with a frequency that is proportional to the shaft speed. This waveform is then detected by an instrument which converts the signal into a measured shaft speed.

For example, US patent number 3,970,935 discloses a digital tachometer for generating electrical pulses at a rate indicative of the speed of rotation of a shaft-like member.

In aero engines, as well as shaft speed control, the measured shaft speed is often also used for shaft overspeed protection.

However, phonic wheels and pulse probes require dedicated shaft length to accommodate them. Further, multiple pulse probes are generally required to give acceptable speed signal reliability. This all adds weight, complexity and cost to the engine.

Thus a first aspect of the present invention provides a system for measuring the rotational velocity of the rotor of an electric motor or generator having (i) a stator with a plurality of circumferentially spaced pole pieces, each pole piece having a corresponding armature winding, and (ii) a rotor with a plurality of circumferentially spaced magnet portions, the armature windings interacting with the magnetic field produced by the magnet portions, wherein the system includes:
one or more voltage sensing coils, the or each voltage sensing coil being adapted to encircle a respective pole piece of the stator such that a time-varying electromotive force is induced in the voltage sensing coil as the magnet portions of the rotor pass by the pole piece, and
a detector for detecting the time-varying electromotive force induced in the or each voltage sensing coil, and determining the rotational velocity of the rotor from the time between peaks in the induced electromotive force.

Thus, for example, when a rotating shaft (such as a shaft of an aero gas turbine engine) already has an electric motor (e.g. to drive the shaft) or generator (e.g. to generate electrical power from the shaft), the system provides a convenient approach for measuring the rotational speed of the shaft without having to install a phonic wheel and proximity probes.

The determination of the rotational velocity of the rotor from the time between peaks in the induced electromotive force can be performed directly or indirectly. That is, directly by measuring the actual time between peaks, or indirectly by measuring a characteristic of the induced electromotive force, such as the time between zero-crossings in the induced electromotive force or the frequency of the induced electromotive force, which is related to the time between peaks.

The system may have any one or any combination of the following optional features.

Preferably the system has a plurality of voltage sensing coils. The detector may then average the time between peaks in the induced electromotive force for the different coils to determine the rotational velocity of the rotor. This can provide a more accurate and reliable rotational velocity measurement.

The system can be retro-fitted to an existing motor or generator or provided as a component of a new motor or generator.

A second aspect of the present invention provides an electric motor or generator having:
a stator with a plurality of circumferentially spaced pole pieces, each having a corresponding armature winding,
a rotor with a plurality of circumferentially spaced magnet portions, wherein the armature windings interact with the magnetic field produced by the magnet portions, and
a system according to the first aspect (optionally including any one or any combination of the optional features of the system) for measuring the rotational velocity of the rotor, the or each voltage sensing coil of the system encircling a respective pole piece of the stator.

The motor or generator may have any one or any combination of the following optional features.

Preferably, each pole piece is encircled by a respective voltage sensing coil.

Typically, the magnet portions are permanent magnets, although the magnet portions can alternatively be electro magnets.

A third aspect of the present invention provides a gas turbine engine having the motor or generator of the second aspect (optionally including any one or any combination of the optional features of the motor or generator), the rotor being mounted to a shaft of the engine.

The gas turbine engine may have any one or any combination of the following optional features.

Preferably the gas turbine engine is an aero engine.

The electric motor or generator may be a starter motor for the engine. For example, in the context of an aero gas turbine engine, the motor may be a starter motor for the high pressure shaft of the engine.

Alternatively, the electric motor or generator may be a generator converting rotational energy of the shaft into electrical power.

Embodiments of the invention will now be described by way of example with reference to the accompanying drawings in which:
Figure 1 shows a longitudinal cross section through a portion of an aero gas turbine engine; and
Figure 2 shows a schematic cross section through a pole piece and armature winding.

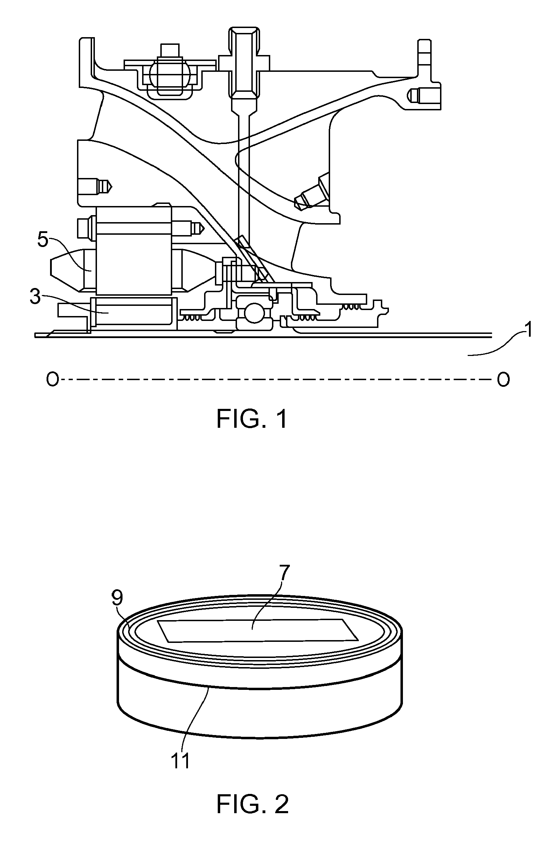

The engine has a high pressure shaft 1 which rotates about an engine axis 0-0. Mounted on the shaft is a starter motor comprising a rotor 3 and a stator 5. The rotor has a plurality of circumferentially spaced permanent magnets, and the stator has a plurality of circumferentially spaced pole pieces, each with a respective armature winding. Figure 2 shows a schematic cross section through one such pole piece 7 and armature winding 9.

When a current is passed through the armature windings 9, a magnetic field is generated which, coupled via the pole pieces, interacts with the magnetic field produced by the permanent magnets to generate a torque which rotates the shaft 1.

The starter motor also incorporates a system for measuring the rotational speed of the shaft. The system comprises a respective voltage sensing coil 11 circumnavigating at least one of the pole pieces 7 and a detector circuit (not shown) connected to the voltage sensing coil. Suitable configurations of the detector circuit are known to the skilled person. An output voltage is created in the coil by electromagnetic induction as the rotor permanent magnets pass by the pole piece and change the magnetic field experienced by the coil. Advantageously, no external electrical excitation is required to produce this voltage.

The detector circuit detects the peaks or zero-crossings in the induced voltage, each peak corresponding to the passage of a rotor permanent magnet. The circuit has a counter which counts the peaks or zero-crossings. The circuit also has a timer, allowing the time between peaks or zero-crossings to be determined. For a single coil, rotor speed can then be calculated as follows: speed in rpm = 60 / {(seconds between two peaks or zero-crossings) x (number of rotor permanent magnet pairs)}. The determination of the time between peaks or zero-crossings and the rotor speed calculation can be performed, e.g. by a microprocessor. Alternatively, the quantity "seconds between two peaks or zero-crossings" can be obtained from a measurement of the frequency of the induced voltage.

The system can be realized with just one voltage sensing coil 11, but for reliability it is preferable to have at least two coils. Indeed, because the voltage sensing coils are typically a minor addition to the main armature windings 9, one voltage sensing coil per pole piece 7 can generally be accommodated. The rotor speed can then be measured by averaging the time between peaks or zero-crossings for different coils.

Advantageously, speed sensing is thus incorporated into the starter motor, and avoids the need for a separate, more complex, speed sensing device, such as a phonic wheel and associated pulse probes. Cost, as well as weight and space savings, can be achieved.

While the invention has been described in conjunction with the exemplary embodiment described above, many equivalent modifications and variations will be apparent to those skilled in the art when given this disclosure. For example, instead of, or in addition to, the starter motor, the shaft 1 could have a generator which generates electrical power from the rotation of the shaft. The generator could then be fitted with voltage sensing coils and a detector for measuring the rotational velocity of the shaft. Alternatively another part of the aero gas turbine engine (e.g. an intermediate or low pressure shaft, or a gear box shaft) could carry such an electrical generator. Accordingly, the exemplary embodiment of the invention set forth above is considered to be illustrative and not limiting. Various changes to the described embodiment may be made without departing from the spirit and scope of the invention.

All references referred to above are incorporated by reference.

## Claims

1. A system for measuring the rotational velocity of the rotor of an electric motor or generator having (i) a stator (5) with a plurality of circumferentially spaced pole pieces (7), each pole piece having a corresponding armature winding (9), and (ii) a rotor (3) with a plurality of circumferentially spaced magnet portions, the armature windings interacting with the magnetic field produced by the magnet portions, wherein the system includes:
one or more voltage sensing coils (11) for sensing rotational velocity of the rotor only, the or each voltage sensing coil being adapted to encircle a respective pole piece of the stator such that a time-varying electromotive force is induced in the voltage sensing coil as the magnet portions of the rotor pass by the pole piece, and
a detector for detecting the time-varying electromotive force induced in the or each voltage sensing coil, and determining the rotational velocity of the rotor from the time between peaks in the induced electromotive force.

2. An electric motor or generator having:
a stator with a plurality of circumferentially spaced pole pieces, each having a corresponding armature winding,
a rotor with a plurality of circumferentially spaced magnet portions, wherein the armature windings interact with the magnetic field produced by the magnet portions, and
a system according to claim 1 for measuring the rotational velocity of the rotor, the or each voltage sensing coil of the system encircling a respective pole piece of the stator.

3. An electric motor or generator according to claim 1 or 2 wherein the magnet portions are permanent magnets.

4. A gas turbine engine having the motor or generator of claim 2 or 3, the rotor being mounted to a shaft of the engine.

5. A gas turbine engine according to claim 4, wherein the electric motor or generator is a starter motor for the engine.

6. A gas turbine engine according to claim 4, wherein the electric motor or generator is a generator converting rotational energy of the shaft into electrical power.

7. A gas turbine engine according to any one of claims 4 to 6 which is an aero engine.

8. A system for measuring the rotational velocity of the rotor of an electric motor or generator as any one herein described with reference to and/or as shown in the accompanying drawings.
